# EUROPÄISCHE PATENTSCHRIFT

(11) **EP 2 187 375 B1**
(45) Veröffentlichungstag und Bekanntmachung des Hinweises auf die Patenterteilung: **03.04.2013**
(21) Anmeldenummer: 09013805.8
(22) Anmeldetag: 03.11.2009
(51) Int. Cl.: G09F 9/37, G09F 19/16

(54) **Anzeigeelement mit Reflektor**
Display element with reflector
Elément d'affichage doté d'un réflecteur

(30) Priorität: 18.11.2008 DE 102008057848
(43) Veröffentlichungstag der Anmeldung: 19.05.2010
(73) Patentinhaber: advanced display technology AG, 9050 Appenzell (CH)
(72) Erfinder: Bitman, Andriy, 44147 Dortmund (DE); Müller-Marc, Oliver, 9050 Appenzell (CH)
(74) Vertreter: Tönhardt, Marion

(56) Entgegenhaltungen:
- EP-A1- 0 288 586
- US-A1- 2006 060 870
- US-A1- 2008 085 652
- HOU L ET AL: "Electrowetting manipulation of any optical film" APPLIED PHYSICS LETTERS, AIP, AMERICAN INSTITUTE OF PHYSICS, MELVILLE, NY, US, Bd. 90, Nr. 25, 22. Juni 2007 (2007-06-22) , Seiten 251114-251114, XP012095340 ISSN: 0003-6951
- NEIL R SMITH ET AL: "A New Form of Flat Optics Enabled by Electrowetting Microprisms" LASERS&ELECTRO-OPTICS SOCIETY, IEEE, IEEE, PI, 1. Oktober 2006 (2006-10-01), Seiten 819-820, XP031004360 ISBN: 978-0-7803-9556-5

## Beschreibung

### Gebiet der Erfindung

Die Erfindung betrifft das Gebiet von Anzeigeelementen, wie sie in entsprechend hoher Zahl beispielsweise in hochauflösenden Anzeigen zum Einsatz kommen. Insbesondere betrifft die Erfindung ein Anzeigeelement zur Darstellung einer Mehrzahl von Farben, sowie ein Verfahren dazu.

### Stand der Technik und Nachteile

Aus dem Stand der Technik sind vielfältige Arten von Anzeigen bekannt, die auf der Verwendung einzelner Bildpunkte, hier Anzeigeelemente genannt, beruhen. Zur Darstellung der gewünschten Information wird diese zunächst in einzelne Bildpunkte zerlegt, die dann mittels der Anzeigeelemente dargestellt werden.

Auch für die Ausführungsformen der Anzeigeelemente sind aus dem Stand der Technik eine große Anzahl unterschiedlicher Verfahren zum Aufbau derselben bekannt. Besonders häufig sind elektrisch betriebene Anzeigen anzutreffen, wie beispielsweise so genannte TFT-Displays. Für spezielle Zwecke etablieren sich auch auf fluidischen Verfahren basierende Technologien, wie beispielsweise Anzeigen der Fa. Liquavista (NL), s. z.B. das Dokument US 7,304,786. Schließlich sind auch auf Festkörpern beruhende Anzeigeelemente bekannt, die auf der wahlweisen Sichtbarmachung eines teilweise eingefärbten, kleinen Partikels beruhen. Beispielhaft seien hier die Produkte der Fa. E-Ink Corporation (USA) genannt, s. z.B. Dokument US 6,120,588 ("Electronically addressable microencapsulated ink and display thereof").

Ein wichtiges Ziel bei der Konstruktion einer auf eine Vielzahl von Anzeigepunkten basierenden Anzeige ist dabei die möglichst gute Ausnutzung des zur Verfügung stehenden Platzes. Je nach genauer Ausgestaltung eines einzelnen Anzeigeelements steht dabei nicht die volle vom jeweiligen Anzeigeelement verbrauchte Fläche zur Anzeige des Bildpunktes zur Verfügung, da ein Teil des aus der Blickrichtung eines Betrachters (Betrachtungsrichtung) sichtbaren Bereiches für die Peripherie des Anzeigeelementes benötigt wird (Grenzbereich zu den benachbarten Anzeigeelementen, Verdrahtung, ...). Das Verhältnis zwischen der Gesamtfläche der Anzeige und der Fläche, die tatsächlich zur Darstellung der Bildpunkte zur Verfügung steht, soll dabei möglichst groß sein. Ein Verhältnis von 1 steht demnach für eine optimal ausgenutzte Anzeigefläche, eines von 0,5 steht für eine Anzeige, bei der 50% der Anzeigefläche aufgrund peripherer Aufgaben nicht zur Darstellung der Bildpunkte zur Verfügung steht.

Ein weiteres Problem bei der Darstellung von Bildpunkten liegt in dem teilweise hohen Stromverbrauch derselben. Insbesondere in Bereichen, in denen statische Bilder überwiegen ("elektronische Bücher", Plakatwerbung), muss besonderes Augenmerk auf geringen Stromverbrauch gelegt werden. Dies insbesondere auch deswegen, weil in derartigen Applikationen häufig auf mobile Stromversorgungen zurückgegriffen werden muss.

Ein ebenfalls sich häufig stellendes Problem in derartigen Applikationen ist die Darstellung von farbigen Inhalten. Dazu werden entweder mehrere Einzelfarben übereinander gelegt (subtraktives Verfahren), oder die Einzelfarben liegen nebeneinander (additives Verfahren). Während im ersten Fall die Helligkeit der Anzeige mit der Anzahl der zu durchdringenden Ebenen abnimmt, weisen Anzeigen nach dem additiven Verfahren den Nachteil einer geringen Apertur auf. So kann diese bei der Darstellung einer einzelnen Farbe, bei der die übrigen Farben ausgeschaltet bleiben, auf 0,33 heruntergehen. Insbesondere im Hinblick auf die oben genannten Applikationen ("elektronische Bücher", Plakatwerbung) kann zusammenfassend festgestellt werden, dass auch hier noch keine zufriedenstellenden Lösungen existieren.

Ein Anzeigeelement zur Darstellung mindestens einer Farbe, umfassend mehrere, jeweils mit einer entsprechenden Farbe gefärbte, farbgebende Flächen, wobei jede farbgebende Fläche parallel oder gekippt zu einer Betrachtungerichtung angeordnet ist, und mindestens einen Reflektor, ist aus dem Dokument EP 0 288 586 A1 bekannt. Die dort beschriebenen gefärbten, reflektierenden Flächen bestehen aus einer Schicht aus gefärbtem, reflektierendem Material, die beispielsweise auf der Innenwand eines Zylinders mit polygonalem Querschnitt angeordnet sind, wobei jede Fläche mit einem unterechiedlichen, gefärbten, reflektierenden Material ausgestattet ist. Der Zylinder kann sich dabei frei um seine Symmetrieachse drehen. Innerhalb des Zylinders befindet sich stationär ein Reflektor, wobei der Zylinder in Bezug auf den Reflektor so positioniert wird, dass die Fläche mit der gewünschten Farbe in den Strahlengang des Spiegels und somit in die Betrachtungsrichtung des Betrachters gebracht wird.

### Aufgabe der Erfindung und Lösung

Der Erfindung liegt die Aufgabe zugrunde, die Nachteile des Standes der Technik zu überwinden. Insbesondere soll die Erfindung eine möglichst gute Apertur aufweisen. Ferner soll die Leistungsaufnahme der Anzeige insbesondere bei der Darstellung statischer Bilder möglichst gering sein, und zudem die Darstellung von farbigen Informationen ermöglichen.

Dazu wird eine Vorrichtung in Form eines Anzeigeelements gemäß Anspruch 1 sowie ein Verfahren gemäß Anspruch 10 vorgeschlagen. Demnach basiert das Anzeigeelement erfindungagemäß auf mehreren farbgebenden Flächen, die beispielsweise parallel zur Blickrichtung eines Betrachters angeordnet sind, so dass dieser nur auf die schmalen Kanten der Flächen blickt. Den eigentlichen Inhalt wird erst dadurch erkennbar, dass ferner ein bewegbarer Reflektor vorgesehen ist, in welchem sich die farbgebende Fläche spiegelt.

Weitere bevorzugte Ausführungsformen sind den abhängigen Ansprüchen sowie der nachfolgenden detaillierten Beschreibung und den Figuren zu entnehmen.

### Beschreibung

Die Erfindung nutzt zunächst die Erkenntnis, dass zur Erreichung einer hohen Apertur möglichst geringe periphere Bereiche in einem Anzeigeelement vorhanden sein dürfen. Dazu umfasst das Anzeigeelement für jede anzuzeigende Farbe jeweils eine mit der entsprechenden Farbe gefärbte, farbgebende Fläche. Die mindestens eine farbgebende Fläche ist dabei parallel oder gekippt zur Betrachtungsrichtung eines Betrachters angeordnet. Dies führt bevorzugt dazu, dass sie aus dessen Betrachtungerichtung gesehen im Wesentlichen nicht "sichtbar" ist, wobei mit "sichtbar" im Folgenden immer die Sichtbarkeit der farbgebenden Fläche(n) aus Betrachtungsrichtung gemeint ist. Bevorzugt stehen die farbgebenden Flächen senkrecht auf einer Grundfläche des Anzeigeelements bzw. exakt parallel zu der Betrachtungsrichtung, so dass aus dieser Betrachtungsrichtung gesehen nur die schmale Kante der jeweiligen farbgebenden Fläche sichtbar ist. Der zugehörige Flächenrieigungswinkel β beträgt dann 90 Grad. Da die farbgebende Fläche jedoch für den Farbeindruck verantwortlich ist, selber aber nahezu keinen Platz innerhalb des Anzeigeelements beansprucht, ist auf diese Weise eine besonders gute Apertur erreichbar.

Für den Fall einer oder mehrerer gekippter farbgebender Flächen ist der Flächenneigungewinkel β bevorzugt so eingestellt, dass er zwischen 90 Grad (parallel zur Betrachtungsrichtung) und 120 Grad beträgt, so dass sich zwischen Betrachtungsrichtung und Ebene der jeweiligen Fläche(n) ein spitzer Winkel (0 bis 30 Grad) ergibt.

Ferner umfasst das erfindungsgemäße Anzeigeelement mindestens einen bewegbaren Reflektor. Damit der Inhalt der jeweiligen farbgebenden Fläche nun vom Betrachter aus sichtbar ist, ist der mindestens eine Reflektor derart bewegbar, dass aus Betrachtungsrichtung gesehen ein variierbarer Teil der farbgebenden Fläche sichtbar ist. Mit anderen Worten, je nach Stellung des Reflektors ist eine unterschiedlich große Projektion des Bildes der farbgebenden Fläche von außen sichtbar. Wird der Kippwinkel α zwischen der Reflektorfläche und der Grundfläche des Anzeigeelements gemessen, so ist bei einem Kippwinkel von 45 Grad gerade die größtmögliche Projektion der farbgebenden Fläche sichtbar. Bei einem Kippwinkel von 90 Grad blickt der Betrachter auf die Kante des Reflektors, so dass der Eindruck eines schwarzen Bildes entsteht. Bei einem Kippwinkel von 0 Grad steht der Reflektor senkrecht auf der Betrachtungsrichtung, so dass der Eindruck eines hellen Bildes entsteht, sofern der Außenraum hell ist.

Erfindungsgemäß umfasst das Anzeigeelement mehrere farbgebende Flächen. Die Flächen können dabei unterschiedliche Farben aufweisen, oder gleiche Farben unterschiedlicher Intensität aufweisen. Die Abfolge der Farben kann beispielsweise den bekannten Mustern "R-G-B" oder "C-Y-M-K" folgen, und ggf. zusätzlich auch eine schwarze, graue und/oder weiße Farbe umfassen. Bevorzugt weisen die farbgebenden Flächen im Wesentlichen den gleichen Flächeninhalt und/oder die gleiche Form auf. Es ist alternativ jedoch möglich, dass dieselben je nach Anforderung an das anzuzeigende Bild entsprechend angepassten Flächeninhalte und/oder Formen aufweisen. Der Flächenneigungswinkel β, unter dem die farbgebenden Flächen im Anzeigeelement angeordnet sind, beträgt bevorzugt 90 Grad. Nach einer alternativen Ausführungsform ist dieser Winkel so bemessen, dass aus Richtung eines Betrachters die Rückseiten der farbgebenden Flächen sichtbar sind, was zu entsprechend angepassten (geringeren) Kippwinkeln des Reflektors führt. Nach noch einer alternativen Ausführungsform ist der winkel β für mindestens eine der farbgebenden Flächen variierbar. Bevorzugt ist er für alle Flächen variierbar.

Damit die Inhalte der farbgebenden Flächen vom Betrachter aus sichtbar sind, ist es erforderlich, dass der mindestens eine Reflektor entsprechend bewegbar ist. Auf diese Weise sind beliebige Anteile einer jeden farbgebenden Fläche und/oder beliebige Anteile mehrerer unterschiedlich farbgebender Flächen sichtbar. Dazu ist es erforderlich, dass der Reflektor entsprechend komplexe Bewegungen auszuführen imstande ist.

Hierzu ist es vorgesehen, dass der mindestens eine Reflektor mindestens eine Bewegungsachse aufweist, wobei eine erste Bewegungsachse senkrecht zur Betrachtungsrichtung verläuft. Eine zweite Bewegungsachse verläuft entweder außerdem zur ersten Bewegungsachse senkrecht, oder der Reflektor ist um eine in Betrachtungsrichtung weisende Achse rotierbar. Mit anderen Worten, der Reflektor weist entweder zwei Kippachsen oder aber eine Kipp-und eine Rotationsachse auf. Je nach konstruktiven Möglichkeiten wird die eine oder die andere Variante bevorzugt sein; das Ergebnis ist prinzipiell identisch. Weitere Bewegungeachsen können vorgesehen sein.

Damit der mindestens einen Reflektor bewegt werden kann, umfasst das erfindungsgemäße Anzeigeelement ferner mindestens einen Antrieb für den mindestens einen Reflektor. Grundsätzlich kommen alle aus dem Stand der Technik bekannten Antriebe zur Erzeugung der Bewegung in Frage. Vorzugsweise ist der mindestens eine Antrieb aus der Gruppe umfassend Elektromotoren, elektrostatische Antriebe, fluidische Antriebe, und Elektrobenetzung ausgewählt.
- Elektromotoren sind dabei vorzugsweise Servomotoren.
- Elektrostatische Antriebe nutzen bevorzugt den Reflektor als Hauptelektrode und mehrere, am Boden und/oder den Wänden bzw. den farbgebenden Flächen des Anzeigeelements angeordnete Gegenelektroden.
- Fluidische Antriebe sind bevorzugt hydraulische Antriebe, können alternativ aber auch pneumatischer Natur sein. Als Medium kommt bevorzugt Wasser oder Öl bzw. Luft zum Einsatz. Die Umformung der fluidischen Energie (Druck) in eine Bewegung kann bevorzugt mittels entsprechender Faltenbälge erreicht werden.

Ein Antrieb mittels Elektrobenetzung nutzt die Tatsache aus, dass eine Flüssigkeit, die sich aus einem unpolaren (z.B. Öl) und einem bipolaren Bestandteil (z.B. Wasser) zusammensetzt, von einem elektrischen Feld abgelenkt wird. Befindet sich die Flüssigkeit beispielsweise in einem Behälter mit beispielsweise quadratischem Grundriss (entsprechend einem Anzeigeelement mit vier farbgebenden Flächen), so bildet sich an jeder farbgebenden Flächen ein bestimmter Kontaktwinkel aus, der beispielsweise mittels einer hydrophoben bzw. hydrophilen Beschichtung in seiner "Ruheposition" beeinflussbar ist. An den senkrechten Wänden des Behälters sind entsprechende Elektroden angeordnet. Durch Anlegen einer Spannung an einer dieser Elektroden wird die Oberflächeenergie der Flüssigkeit im Bereich des von der Elektrode ausgehenden elektrischen Feldes beeinflusst, wodurch sich auch der Kontaktwinkel zur jeweiligen Elektrode und somit der farbgebenden Fläche ändert. Beispielsweise wird sich der Pegel der Flüssigkeit an der Wand mit der höchsten Elektrodenspannung (z.B. 50 V) auf das höchste Niveau, und der Pegel der Flüssigkeit an der Wand mit der geringsten Elektrodenspannung (z.B. 10 V) auf das niedrigste Niveau einstellen. Zwischen diesen beiden Pegeln sinkt das Niveau der Flüssigkeit nahezu gleichförmig ab. Durch Nutzung aller zur Verfügung stehenden Wände kann die Oberfläche der Flüssigkeit in gewissen Grenzen in eine beliebige Stellung gebracht werden. Wird die Oberfläche der Flüssigkeit selber als Reflektor benutzt, oder trägt die Oberfläche einen solchen, kann die Flüssigkeit mittels Elektrobenetzung als Antrieb für die (virtuellen, im beispielhaften Fall durch die Wände des Anzeigeelements definierten) Achsen dienen.

Es kann daher vorgesehen sein, dass der Reflektor als fester oder flüssiger Spiegel ausgebildet ist. Der feste Spiegel kann ein fester amorpher oder kristalliner oder metallsicher Spiegel sein. Dieser ist bevorzugt vollverspiegelt, kann nach einer anderen Ausführungsform auch für bestimmte oder alle sichtbaren Wellenlängen teildurchlässig sein. Ist beispielsweise unterhalb des Anzeigeelements bzw. des Reflektors eine weiße Lichtquelle vorgesehen, kann bei Ansteuerung derselben auf diese Weise leicht der Eindruck eines hellen, weißen Bildpunktes erreicht werden. Ist der Reflektor beispielsweise für Infrarotstrahlung durchlässig, kann diese durch einen unter dem Reflektor angeordneten Infrarotsensor aufgefangen werden. Stehen entsprechend viele, fein aufgelöste Anzeigeelemente in einem regelmäßigen Muster ("array") zur Verfügung, kann eine derartige Anzeige beispielsweise gleichzeitig zur Gesichts- oder Fingerabdruckerkennung eingesetzt werden.

Nach einer alternativen Ausführungsform ist der Reflektor als spiegelnde Oberfläche einer Flüssigkeit ausgebildet. Hierzu sind beispielsweise bei Raumtemperatur flüssige Metalle wie insbesondere Quecksilber geeignet, aber auch alle anderen Flüssigkeiten, die eine ausreichende Reflektivität für die gewünschten Wellenlängen aufweisen. Alternativ ist vorgesehen, dass die Flüssigkeit aus einem Zwei- oder Mehrphasen-Gemisch besteht, wobei sich zwischen mindestens zwei Phasen eine totalreflektierende Schicht herausbildet.

Nach einer weiteren Ausführungsform ist vorgesehen, dass die Wölbung der Oberfläche der Flüssigkeit dergestalt beeinflussbar ist, so dass sich mehrere Einzelreflektoren bilden. Dies kann beispielsweise dadurch geschehen, dass unterhalb der Flüssigkeitsoberfläche eine Mehrzahl entsprechender Elektroden angeordnet ist, die jeweils einzeln ansteuerbar sind. Durch Ansteuerung einer bestimmten Elektrode ist die darüber befindliche Flüssigkeitsoberfläche einem elektrischen Feld ausgesetzt, welches bei geeigneter Beschaffenheit der Flüssigkeit (Elektrobenetzungseffekt) zu einer Anziehung beziehungsweise Abstoßung der Flüssigkeitsoberfläche führt, so dass sich die Wölbung entsprechend ändert. Auf diese Weise ist es möglich, mehrere separate Reflektoren zu erzeugen, oder diese gewünschtenfalls zu einem einzigen, großflächigen Reflektor zusammenzufassen.

Nach einer weiteren Ausführungsform sind die farbgebenden Flächen selbstleuchtend. Dazu können die farbgebenden Flächen beispielsweise aus organischen Leuchtdioden (OLEDs) bestehen. Derartige Leuchtdioden haben den Vorteil, neben einer eigenen Lumineszenz auch in ihrer Färbung variierbarer zu sein. Gleiches gilt für ihre Leuchtkraft. Durch die Verwendung selbst leuchtender farbgebender Flächen ist es möglich, auf externe Quellen wie beispielsweise das Umgebungslicht zu verzichten. Dies ist insbesondere in dunklen Umgebungen von Vorteil. Ferner ist es besonders vorteilhaft, die jeweilige Farbe einer bestimmten Fläche an die entsprechenden Gegebenheiten anpassen zu können. Im Falle eines einzelnen Reflektors je Anzeigeelement kann dieser nicht mehr als zwei nebeneinander liegende farbgebende Flächen darstellen. Sollte eine Darstellung der gewünschten Mischfarbe jedoch nur durch farbgebende Flächen darstellbar sein, die gerade nicht nebeneinander liegen, so wäre die entsprechende Mischfarbe nicht darstellbar. Dieses Problem lässt sich durch in ihrer Färbung variierbarer Flächen elegant umgehen. Zudem kann die Anzahl der benötigten farbgebenden Flächen auch im Falle eines großen darzustellenden Farbraums reduziert werden.

Nach einer bevorzugten Ausführungsform ist vorgesehen, dass der Grundriss des Volumens, welches die farbgebenden Flächen bilden, die Form eines regelmäßigen oder unregelmäßigen Polygons aufweist. Bei drei farbgebenden Flächen entsteht dabei beispielsweise ein gleichseitiges oder gleichschenkliges Dreieck, bei vier farbgebenden Flächen ein Quadrat, Rechteck oder Trapez usw. Die farbgebenden Flächen bilden dabei die Seitenwände des entsprechenden Körpers, welcher die Grenzen des Anzeigeelementes bildet.

Alternativ ist es vorgesehen, dass die farbgebenden Flächen in Form eines Ringes angeordnet sind. Das bedeutet, dass die farbgebenden Flächen keine Ebenen bilden, sondern ineinander übergehen. Der Übergang kam dabei abrupt erfolgen, alternativ kann der Übergang jedoch auch fließend sein. Enthält die Innenfläche des Ringes beispielsweise den gesamten darzustellenden Farbraum, so kann durch Rotation des Reflektors der gewünschte Ausschnitt dieses Farbraums nach außen reflektiert werden. Vorteilhafterweise ist der Reflektor dazu konkav geformt, so dass der auf dem Ring befindliche, kleine Ausschnitt von außen gesehen möglichst die gesamte Fläche des Reflektors ausfüllt. Dem Reflektor kann eine Streulinse nachgeordnet sein, um den Blickwinkel zu verbessern.

Die Erfindung offenbart auch ein Verfahren zur Darstellung mindestens einer Farbe unter Verwendung der beschriebenen, erfindungsgemäßen Vorrichtung.

Das Verfahren gliedert sich dabei in die folgenden Schritte:
- Festlegen der gewünschten darzustellenden Farbe;
- Bestimmen der dieser Farbe nächstkommenden Konfiguration des Anzeigeelements;
- Ansteuern des Anzeigeelements.

Das Festlegen der gewünschten darzustellenden Farbe erfolgt dabei bevorzugt unter Zuhilfenahme einer entsprechenden elektronischen Vorrichtung, wie beispielsweise eines Computers beziehungsweise einer Grafikkarte.

Im nächsten Schritt, in welchem die dieser Farbe nächstkommende Konfiguration des Anzeigeelementes ermittelt wird, wird wiederum bevorzugt ein Computer eingesetzt, welcher einerseits das gewünschte Farbsignal bereithält, und in dem andererseits die Möglichkeiten der erfindungsgemäßen Anzeigeelemente in Form eines Modells abgelegt sind. Durch Approximation der durch die erfindungsgemäßen Anzeigeelemente darstellbaren Farben an das gewünschte Farbsignal wird die jeweils optimale Konfiguration berechnet.

Anschließend erfolgt das Ansteuern des bzw. der Anzeigeelemente. Je nach Ausführungsform der erfindungsgemäßen Vorrichtung untergliedert sich das Ansteuern wiederum in mehrere Schritte.

Sofern möglich, wird zunächst die Leuchtkraft der einzelnen farbgebenden Flächen angepasst. Auf diese Weise sind mehr oder weniger helle Bilder, oder entsprechende Graustufen bzw. Sättigungen erzeugbar.

Anschließend wird die Färbung der einzelnen farbgebenden Flächen angepasst, sofern dies im der konkreten Ausführungsform der erfindungsgemäßen Vorrichtung vorgesehen ist.

Schließlich werden der oder die Antriebe für den oder die Reflektoren des jeweiligen Anzeigeelements angesteuert.

Bevorzugt werden die beschriebenen Schritte zur Ansteuerung des Anzeigelements gleichzeitig durchgeführt, um so zu einer möglichst schnellen Darstellung des jeweiligen Bildpunktes zu gelangen. Alternativ können die Schritte auch nacheinander, jedoch in einer anderen als der beispielhaft beschriebenen Reihenfolge durchgeführt werden. Besonders bevorzugt gilt die gleichzeitige Ansteuerung auch für alle anderen Anzeigeelemente, aus denen eine entsprechende Anzeige zusammengesetzt ist.

Die erfindungsgemäße Vorrichtung bietet, wie beschrieben, vor allem die Möglichkeit einer besonders guten Apertur. Durch die Verwendung senkrecht stehender farbgebender Flächen in Verbindung mit einem bewegbaren Reflektor, der Teile dieser Flächen nach außen reflektiert, wird ein Anzeigeelement geschaffen, welches sehr geringe periphere, zur Darstellung nicht benutzbare Bereiche aufweist. Je nach konkreter Ausführungsform des Antriebs für den Reflektor kann der Antrieb so ausgestaltet sein, dass er nach Erreichen einer Sollposition diese ohne weitere Leistungsaufnahme einhält, was im Falle statischer Bilder zu einem sehr geringen Leistungsverbrauch führt. Durch die Verwendung einer entsprechend großen Anzahl farbgebender Flächen im Inneren eines Anzeigeelements oder bei bevorzugter Verwendung eines auf seiner Innenseite farbgebenden Ringes ist ein großer Farbraum darstellbar. Durch die wahlweise Verwendung selbstleuchtender farbgebender Flächen oder anderer in das Anzeigeelement integrierter Leuchtquellen kann die Anzeige gewünschtenfalls von dem Vorhandensein von Umgebungslicht unabhängig gemacht werden.

### Figurenübersicht

- Fig. 1A: zeigt die schematische Ansicht einer Ausführungsform des erfindungsgemäßen Anzeigeelements mit vier farbgebenden Flächen.
- Fig. 1B: zeigt die schematische Ansicht der Fig. 1, mit gekipptem und gedrehtem Reflektor.
- Fig. 2: zeigt die schematische Ansicht einer Ausführungsform des erfindungsgemäßen Anzeigeelements mit einem Ring als farbgebende Fläche.
- Fig. 3: zeigt die schematische Ansicht einer weiteren Ausführungsform des erfindungsgemäßen Anzeigeelements mit einer zusätzlichen Streulinse.

### Figurenbeschreibung

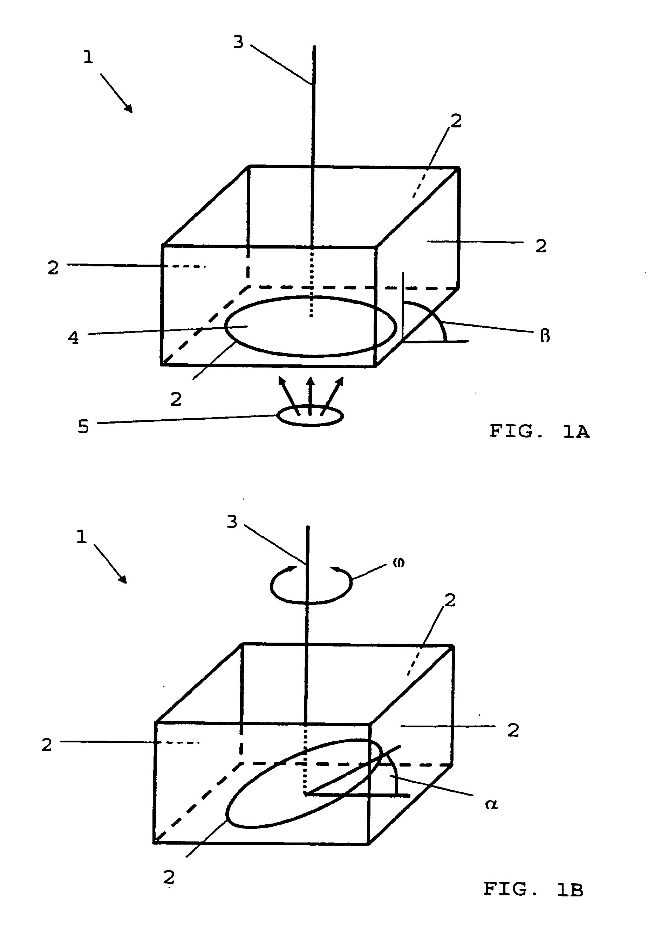

Die **Fig. 1A** zeigt die schematische Ansicht einer Ausführungsform des erfindungsgemäßen Anzeigeelements 1 mit vier farbgebenden Flächen 2. Die farbgebende Flächen 2 sind derart angeordnet, dass sie die Seiten eines quadratischen Körpers bilden, an dessen Grundfläche sich der Reflektor 4 befindet. Dieser ist nach der dargestellten Ausführungsform rund ausgeführt, er kann aber alternativ auch beispielsweise quadratisch sein. Nach der dargestellten Ausführungsform befindet sich der Reflektor 4 in etwa in der Ebene der Grundfläche des quadratischen Körpers; es kann nach einer nicht dargestellten Ausführungsform auch vorteilhaft sein, ihn etwas unterhalb der Grundfläche zu positionieren, um eine größere Bewegungsfreiheit zu haben.

Die farbgebenden Flächen 2 sind ferner parallel zur Betrachtungsrichtung 3 ausgerichtet, wodurch sich ein Flächenneigungswinkel β von 90 Grad ergibt. Auf diese Weise kann ein Betrachter den Inhalt der farbgebenden Flächen 2 nicht direkt einsehen, sondern blickt nur auf die schmalen Oberkanten derselben, sowie auf den Reflektor 4. Nach der dargestellten Ausführungsform ist der Reflektor so ausgerichtet, dass Licht, welches aus Betrachtungsrichtung 3 in das Anzeigeelement 1 fällt, gerade wieder herausreflektiert wird, so dass im Falle einer hellen Umgebung der Eindruck eines hellen Bildpunktes hervorgerufen wird. Damit für den Fall einer dunklen Umgebung ebenfalls helle Bildpunkte erzeugbar sind, ist unterhalb des Reflektors eine Leuchtquelle 5 angeordnet. Diese kann bevorzugt eine weiße Leuchtquelle sein. Ihr Licht kann entweder durch einen halbdurchlässig ausgestalteten Reflektor 4 zu einem Betrachter gelangen, oder der Reflektor stellt sich für den Fall eines ausschließlich hellen Bildpunktes parallel zur Blickrichtung (nicht dargestellt). Soll der Bildpunkt dunkel bleiben, schaltet sich die Leuchtquelle aus. Sollen Zwischenstufen dargestellt werden, kann die Leuchtquelle dimmbar ausgestaltet sein.

In **Fig. 1B** ist die schematische Ansicht der Fig. 1 mit gekipptem und gedrehtem Reflektor 4, jedoch ohne Leuchtquelle 5 dargestellt. Zwischen der Fläche des Reflektors 4 und der Grundfläche des Anzeigeelements 1 bildet sich der Kippwinkel α aus. Nicht dargestellt sind die zum Kippen notwendigen Teile des Anzeigeelements 1 (Antrieb). Nach der dargestellten Ausführungsform befindet sich der Drehpunkt im Zentrum des Reflektors 4. Es kann jedoch auch vorteilhaft sein, den Drehpunkt an eine andere Stelle, beispielsweise an den Rand des Reflektors 4 zu legen; insbesondere dann, wenn nur eine einzige farbgebende Fläche 2 vorhanden ist, oder wenn der Reflektor 4 zusätzlich drehbar gelagert ist, wie vorliegend durch den Drehwinkel ϕ angedeutet.

Durch eine Kombination von Kippen und Drehen kann der Reflektor so ausgerichtet werden, dass entweder überhaupt keine farbgebende Fläche 2 sichtbar ist (Kippwinkel α = 90 Grad), dass gerade eine einzelne gefärbte Fläche 2 sichtbar ist (Drehwinkel ϕ gleich 90 / 180 / 270 / 360 Grad; Ausrichtung α größer 0 und kleiner 90 Grad), oder dass zwei aneinander angrenzende farbgebende Flächen 2 sichtbar sind (Drehwinkel ϕ nicht gleich 90 / 180 / 270 / 360 Grad). Es ist klar, dass nach der dargestellten Ausführungsform nur solche Farben darstellbar sind, die sich durch Mischen zweier aneinander angrenzender farbgebende Flächen 2 ergeben. Um diese Einschränkung abzuschwächen, kann eine Mehrzahl farbgebender Flächen 2 vorgesehen werden (nicht dargestellt), wobei sich ggf. auch Farben wiederholen können. Besonders vorteilhaft ist es, wenn die farbgebenden Flächen 2 in ihrer Färbung änderbar ausgestaltet sind, beispielsweise durch Nutzung von organischen Leuchtdioden (vg. Beschreibung oben).

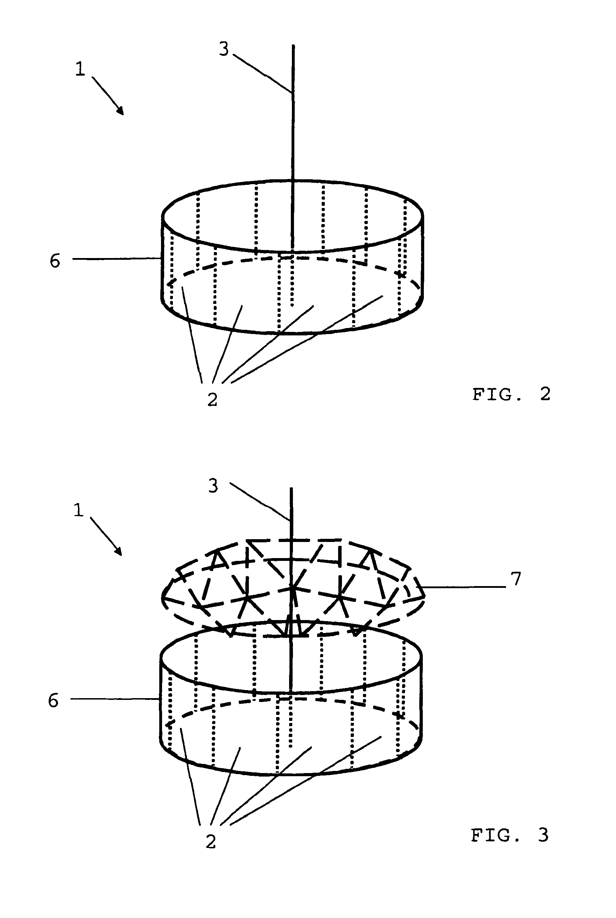

Die **Fig. 2** zeigt die schematische Ansicht einer Ausführungsform des erfindungsgemäßen Anzeigeelements 1 mit einem Ring 6 als farbgebende Fläche 2. Nicht dargestellt ist aus Gründen der Übersichtlichkeit der Reflektor 4. Nach dieser Ausführungsform sind die farbgebenden Flächen 2 nicht als ebene Segmente ausgebildet, sondern auf der Innenfläche einer Zylinderfläche angeordnet (Ring 6). Die Übergänge zwischen den einzelnen farbgebenden Flächen 2 sind durch die punktierten Linien angedeutet. Es kann alternativ auch vorgesehen sein, dass die farbgebenden Flächen 2 nicht abrupt, sondern fließend ineinander übergehen, so dass eine besonders gute Farbmischung erzielbar ist. In diesem Falle kann der Ring 6 auf seiner Innenseite den gesamten gewünschten darzustellenden Farbraum beinhalten, wobei beispielsweise im unteren Bereich die Farben mit geringer Sättigung, im oberen Bereich die Farben mit hoher Sättigung angeordnet sein können (nicht dargestellt). Für den hier dargestellten Fall ist es vorteilhaft, wenn der Reflektor 4 (nicht dargestellt) konkav (hohlspiegelartig)ausgestaltet ist, um immer nur einen kleinen Teil der Innenseite des Ringes 6 nach außen zu reflektieren. Ebenfalls in der Fig. 2 nicht dargestellt sind der oder die Antriebe sowie ggf. eine vorhandene Leuchtquelle 5.

Die **Fig. 3** zeigt eine schematische Ansicht einer weiteren Ausführungsform des erfindungsgemäßen Anzeigeelements 1. Diese entspricht der Ausführungsform nach Fig. 2, enthält aber zusätzlich eine Streulinse 7, die in einem Abstand vom Ring 6 angeordnet ist. Die Streulinse 7 dient zur Verbesserung des Blickwinkels.

### Bezugszeichenliste und Abkürzungen

- 1: Anzeigeelement
- 2: farbgebende Fläche
- 3: Betrachtungsrichtung
- 4: Reflektor
- 5: Leuchtquelle
- 6: Ring
- 7: Streulinse
- α: Kippwinkel
- β: Flächenneigungswinkel
- ϕ: Drehwinkel

## Patentansprüche

1. Anzeigeelement (1) zur Darstellung mindestens einer Farbe, umfassend mehrere, jeweils mit einer entsprechenden Farbe gefärbte, farbgebende Flächen (2), wobei jede farbgebende Fläche (2) parallel oder gekippt zu einer Betrachtungsrichtung (3) angeordnet ist, und mindestens einen Reflektor (4); **dadurch gekennzeichnet, dass** der mindestens eine Reflektor (4) derart bewegbar ist, dass aus Betrachtungsrichtung (3) gesehen beliebige Anteile einer jeden farbgebenden Fläche (2) oder beliebige Anteile mehrerer unterschiedlich farbgebender Flächen (2) sichtbar sind, wobei der mindestens eine Reflektor (4) eine erste Bewegungsachse senkrecht zur Betrachtungsrichtung (3) aufweist, und entweder eine zweite Bewegungsachse senkrecht zur ersten Bewegungsachse aufweist, oder um eine in Betrachtungsrichtung (3) weisende Achse rotierbar ist.

2. Anzeigeelement (1) nach Anspruch 1, **dadurch gekennzeichnet, dass** die farbgebenden Flächen (2) in Form eines Ringes angeordnet sind.

3. Anzeigeelement (1) nach Anspruch 1, **dadurch gekennzeichnet, dass** es ferner mindestens einen Antrieb für den mindestens einen Reflektor (4) umfasst, der vorzugsweise aus der Gruppe umfassend Elektromotoren, elektrostatische Antriebe, fluidische Antriebe, und Elektrobenetzung ausgewählt ist.

4. Anzeigeelement (1) nach Anspruch 1, **dadurch gekennzeichnet, dass** der Reflektor (4) als fester oder flüssiger Spiegel ausgebildet ist.

5. Anzeigeelement (1) nach Anspruch 4, **dadurch gekennzeichnet**, das der Reflektor (4) als fester amorpher oder kristalliner oder metallischer Spiegel ausgebildet ist.

6. Anzeigeelement (1) nach Anspruch 4, **dadurch gekennzeichnet, dass** der Reflektor (4) als spiegelnde Oberfläche einer Flüssigkeit ausgebildet ist.

7. Anzeigeelement (1) nach Anspruch 6, **dadurch gekennzeichnet, dass** die Wölbung der Oberfläche der Flüssigkeit dergestalt beeinflussbar ist, so dass sich mehrere Einzelreflektoren bilden.

8. Anzeigeelement (1) nach Anspruch 1, **dadurch gekennzeichnet, dass** die farbgebenden Flächen (2) selbstleuchtend und in ihrer Leuchtkraft und/oder in ihrer Färbung variierbar sind.

9. Anzeigeelement nach Anspruch 1, **dadurch gekennzeichnet, dass** dem Reflektor (4) eine Streulinse nachgeordnet ist.

10. Verfahren zur Darstellung mindestens einer Farbe unter Verwendung eines Anzeigeelements (1) nach einem der vorangehenden Ansprüche, umfassend die folgenden Schritte:
- Festlegen der gewünschten darzustellenden Farbe;
- Bestimmen der dieser Farbe nächstkommenden Konfiguration des Anzeigeelements;
- Ansteuern des oder der Antriebe für den oder die Reflektoren (4);

11. Verfahren nach Anspruch 10, **dadurch gekennzeichnet, daß** die farbgebenden Flächen (2) selbstlenchtend und in ihrer Leuchthraft und/oder in ihrer Färbung variierbar sind; und bei dem die Schritte:
- Anpassen der Leuchtkraft der einzelnen farbgebenden Flächen (2) und/oder
- Anlassen der Färbung der einzelnen farbgebenden Flächen (2)
wahlweise ganz oder teilweise gleichzeitig oder in beliebiger Reihenfolge durchgeführt werden.

## Claims

1. Display element (1) for the display of at least one color, whereby including a plurality of color-producing surfaces (2) colored with the corresponding color, wherein each color-producing surface (2) is oriented parallel to or is inclined with respect to a viewing direction (3), and at least one reflector (4), **characterized in that** the at least one reflector (4) can be moved such that seen from the viewing direction (3), any desired portions of any color-producing surface (2) or any desired portions of a plurality of different color-producing surfaces (2) are visible, wherein the at least one reflector (4) comprises at least one axis of movement running perpendicular to the viewing direction (3), and either comprises a second axis of movement of the reflector (4) perpendicular to the first axis of movement or can be rotated in an axis that points in the viewing direction (3).

2. Display element (1) as recited in Claim 1, **characterized in that** the color-producing surfaces (2) are arranged in the shape of a ring.

3. Display element (1) as recited in Claim 1, **characterized in that** it also comprises at least one drive system for the at least one reflector (4), which is preferably 18 selected from the group comprising electric motors, electrostatic drives, fluid drives and electrowetting.

4. Display element (1) as recited in Claim 1, **characterized in that** the reflector (4) is realized in the form of solid or liquid mirrors.

5. Display element (1) as recited in Claim 4, **characterized in that** the reflector (4) is realized in the form of a solid amorphous or crystal or metal mirror.

6. Display element (1) as recited in Claim 4, **characterized in that** the reflector (4) is realized in the form of a reflecting surface of a fluid.

7. Display element (1) as recited in Claim 6, **characterized in that** the curvature of the surface of the fluid can be influenced so that a plurality of individual reflectors are formed.

8. Display element (1) as recited in Claim 1, **characterized in that** the color-producing surfaces (22) are luminescent and are variable in terms of their luminous intensity and/or their color.

9. Display element as recited in Claim 1, **characterized in that** a divergent lens is located downstream of the reflector (4).

10. Method for the display of at least one color using a display element (1) as recited in one of the preceding claims, comprising the following steps:
- Definition of the desired color to be displayed;
- Determination of the configuration of the display element that comes closest to this color;
- Activation of the drive or drives for the reflector or reflectors (4).

11. Method as recited in Claim 10, **characterized in that** the color-producing surfaces (2) are luminescent and are variable in terms of their luminous intensity and/or their color; and whereby some or all of the steps:
- adaptation of the luminous intensity of the individual color-producing surfaces (2); and/or
- adaptation of the color of the individual color-producing surfaces (2);
are executed either simultaneously or in any desired sequence.

## Revendications

1. Elément d'affichage (1) permettant de représenter au moins une couleur, comprenant plusieurs surfaces de coloration (2) colorées chacune avec une couleur correspondante, chaque surface de coloration (2) étant disposée parallèlement ou basculée par rapport à une direction d'observation (3), et au moins un réflecteur (4) ; **caractérisé en ce que** l'au moins un réflecteur (4) est mobile de telle sorte que des parties quelconques de chaque surface de coloration (2) ou des parties quelconques de plusieurs surfaces de coloration (2) différentes sont visibles dans la direction d'observation (3), l'au moins un réflecteur (4) comprenant un premier axe de déplacement perpendiculaire à la direction d'observation (3) et comprenant un deuxième axe de déplacement perpendiculaire au premier axe de déplacement ou rotatif autour d'un axe orienté dans la direction d'observation (3).

2. Elément d'affichage (1) selon la revendication 1, **caractérisé en ce que** les surfaces de coloration (2) sont disposées sur la forme d'un anneau.

3. Elément d'affichage (1) selon la revendication 1, **caractérisé en ce qu'**il comprend en outre au moins un entraînement pour l'au moins un réflecteur (4), sélectionné de préférence dans le groupe composé de moteurs électriques, entraînements électrostatiques, entraînements à fluides et mouillage électrique.

4. Elément d'affichage (1) selon la revendication 1, **caractérisé en ce que** le réflecteur (4) est conçu comme un miroir solide ou liquide.

5. Elément d'affichage (1) selon la revendication 4, **caractérisé en ce que** le réflecteur (4) est conçu comme un miroir solide amorphe, cristallin ou métallique.

6. Elément d'affichage (1) selon la revendication 4, **caractérisé en ce que** le réflecteur (4) est conçu comme une surface réfléchissante d'un liquide.

7. Elément d'affichage (1) selon la revendication 6, **caractérisé en ce que** la courbure de la surface du liquide peut être modifiée de telle sorte que plusieurs réflecteurs individuels soient formés.

8. Elément d'affichage (1) selon la revendication 1, **caractérisé en ce que** les surfaces de coloration (2) sont autolumineuses et leur intensité lumineuse et/ou leur coloration sont variables.

9. Elément d'affichage (1) selon la revendication 1, **caractérisé en ce qu'**une lentille de diffusion est disposée en aval du réflecteur (4).

10. Procédé de représentation d'au moins une couleur à l'aide d'un élément d'affichage (1) selon l'une des revendications précédentes, comprenant les étapes suivantes :
- détermination de la couleur souhaitée ;
- détermination de la configuration de l'élément d'affichage la plus proche de cette couleur ;
- pilotage de l'entraînement ou des entraînements pour le ou les réflecteurs (4) ;

11. Procédé selon la revendication 10, **caractérisé en ce que** les surfaces de coloration (2) sont autolumineuses et leur intensité lumineuse et/ou leur coloration sont variables ; et dans lequel les étapes :
- adaptation de l'intensité lumineuse des différentes surfaces de coloration (2) et/ou
- adaptation de la coloration des différentes surfaces de coloration (2)
sont réalisées au choix entièrement ou partiellement en même temps ou dans un ordre quelconque.
